# EUROPEAN PATENT SPECIFICATION

(11) **EP 4 368 499 B1**
(45) Date of publication and mention of the grant of the patent: **28.01.2026**
(21) Application number: 23199325.4
(22) Date of filing: 25.09.2023
(51) Int. Cl.: B64C 1/26, B64C 1/06, B64C 3/18, B64C 1/00

(54) **SEGMENTED SPANWISE BEAM FOR ENHANCED CENTER WING BOX ACCESS**
SEGMENTIERTER SPANNWEITEN-TRÄGER FÜR VERBESSERTEN ZUGANG ZU EINEM ZENTRALEN FLÜGELKASTEN
POUTRE SEGMENTÉE DANS LE SENS DE L'ENVERGURE POUR ACCÈS AMÉLIORÉ À UN CAISSON CENTRAL D'AILE

(30) Priority: 09.11.2022 US 202218053983
(43) Date of publication of application: 15.05.2024
(73) Proprietor: The Boeing Company, Arlington, VA 22202 (US)
(72) Inventor: WHITFIELD, IAN FORREST, Arlington, 22202 (US); PHILLIPS, ERIK ALAN, Arlington, 22202 (US)
(74) Representative: Lissandrini, Marco

(56) References cited:
- GATES DOMINIC: "Boeing revs up robots for 777X in Everett factory, signals that a 797 awaits | The Seattle Times", THE SEATTLE TIMES, 8 June 2017 (2017-06-08), XP093096809, Retrieved from the Internet <URL:https://www.seattletimes.com/business/boeing-aerospace/boeing-revs-up-robots-for-777x-in-everett-factory-signals-that-a-797-awaits/> [retrieved on 20231031]
- PORA J�R�ME: "Composite Materials in the Airbus A380 -From History to Future", PROCEEDINGS 13TH INTERNATIONAL CONFERENCE ON COMPOSITE MATERIALS, 29 June 2001 (2001-06-29), Beijing, XP093096818, Retrieved from the Internet <URL:https://iccm-central.org/Proceedings/ICCM13proceedings/SITE/PAPERS/paper-1695.pdf> [retrieved on 20231031]

## Description

### FIELD

One or more embodiments relate generally to an aircraft, a center wing box assembly for an aircraft, and a spanwise beam section for a center wing box assembly that includes a segmented structural configuration with an optimized access hole to accommodate user access into an interior space of the center wing box for purposes of assembly and maintenance.

### BACKGROUND

A center wing box of an aircraft is a structural component which is operable to provide support and rigidity to the wings of the aircraft. The center wing box is positioned between and connected to the wings, and has a structural configuration and design that varies depending on the size and function of the aircraft. To accommodate access to an interior space of the center wing box for purposes of assembly and maintenance, an access hole, port, or door is provided and defined by a cutout in a continuous web of material of the center wing box.

The structural configuration of the access hole, in particular, the height and vertical position of the access hole are constrained by the presence of peak strains at the corners of the cutout in the continuous web of material. Such peak strain which are a function of the strain gradient between the upper panel, the lower panel, the laminate composition, and the corner geometry. For attachment of carbon fiber span-wise beams, the access holes must leave web material above and below the access hole in order to limit peak strains near the corners of the access hole. Thus, the size and orientation of the access hole makes user access for maintenance work very ergonomically challenging. These difficulties present a risk of workplace injury and damage to the center wing box. Document XP093096809 is an article by Dominic Gates titled "Boeing revs up robots for 777X in Everett factory, signals that a 797 awaits" and published on the 8th of June 2017 in the Seattle Times. This article discusses the production of the Boeing 777. Document XP093096818 is a paper by Jérôme Pora titled "Composite Materials in the Airbus A380 -From History to Future" and published on the 29.06.2001 in the proceedings of the 13th International Conference on Composite Materials held in Beijing. This document reviews the applications of composite materials and technologies on the A380.

### SUMMARY

A spanwise beam section for a center wing box assembly of an aircraft according to claim 1 is provided. Further embodiments of the claimed spanwise beam section are defined by the dependent claims.

### DRAWINGS

The various advantages of the examples of the present disclosure will become apparent to one skilled in the art by reading the following specification and appended claims, and by referencing the following drawings, in which:
FIG. 1 illustrates a perspective view of an aircraft having a center wing box assembly.
FIG. 2 illustrates a front view of an advantageous embodiment of a spanwise beam for the center wing box assembly of FIG. 6.
FIG. 3 illustrates a perspective view of the spanwise beam of FIG. 2.
FIG. 4 illustrates a side view of the spanwise beam of FIG. 2.
FIG. 5 illustrates a front view of an advantageous embodiment of a spanwise beam for the center wing box assembly of FIG. 6.
FIG. 6 illustrates a perspective view of a center wing box assembly for the aircraft of FIG. 1.

### DESCRIPTION

An aircraft, a center wing box assembly for an aircraft, and a spanwise beam section for a center wing box assembly that includes a segmented structural configuration with an optimized access hole to accommodate user access into an interior space of the center wing box for purposes of assembly and maintenance. The spanwise beam section addresses the severe ergonomic challenges associated with an assembly and/or maintenance worker gaining access to the interior space of the center wing box assembly through an access hole. Such ergonomic challenges present risks of workplace injury and/or damage to the aircraft during assembly and maintenance.

This disclosure provides a spanwise beam section having a segmented structural configuration that includes spaced-apart spanwise beam web sections that help define an access hole having an increased overall size that alleviates the ergonomic challenges while reducing risk of workplace injuries and damage to the center wing box. In particular, the access hole comprises a substantially rectangular configuration that has an overall size (area) that is greater than the overall size of traditional or existing access hole designs due to an increase in the height of the access hole relative to a maximum height of traditional access holes. The increased height provides an ergonomic design that facilitates ease in access into an interior space of the center wing box for purposes of assembly and maintenance.

The segmented spanwise beam section structural configuration also reduces confined space work and total assembly hours by eliminating the need for fastening the spanwise beam web to the chord member in a region where the web is removed as well as eliminating horizontal stiffeners and associated joints that are typically used to frame the top and bottom of traditional or existing access holes.

The segmented spanwise beam section structural configuration also eliminates a need for a continuous web to fabricate the spanwise beam section. Due to the reduction in material web needed to fabricate the spanwise beam section, the overall weight of the segmented spanwise beam section is reduced and the manufacturing costs are reduced.

The segmented spanwise beam section structural configuration further eliminates stress concentration(s) that produces large peak strains at the corners of cutouts of a continuous web in traditional or existing center wing box configurations. This detail is, in turn, replaced by additional load transfer from each spanwise beam web section to the chords and other nearby shear structures such as spars, stringers, over-wing beams, and keel under-wing webs.

The segmented spanwise beam section structural configuration also defines an access hole that is centered on the fuselage centerline of the aircraft to take advantage of the relatively low vertical shear loads in this region and placing supporting structure (e.g., keel, over-wing beams) at the corners of the access hole to provide alternate load paths for the vertical shear loads while restraining bending of the spanwise beam chords.

The segmented spanwise beam section structural configuration may be implemented in future center wing box designs, and/or, retroactively applied to existing center wing box designs.

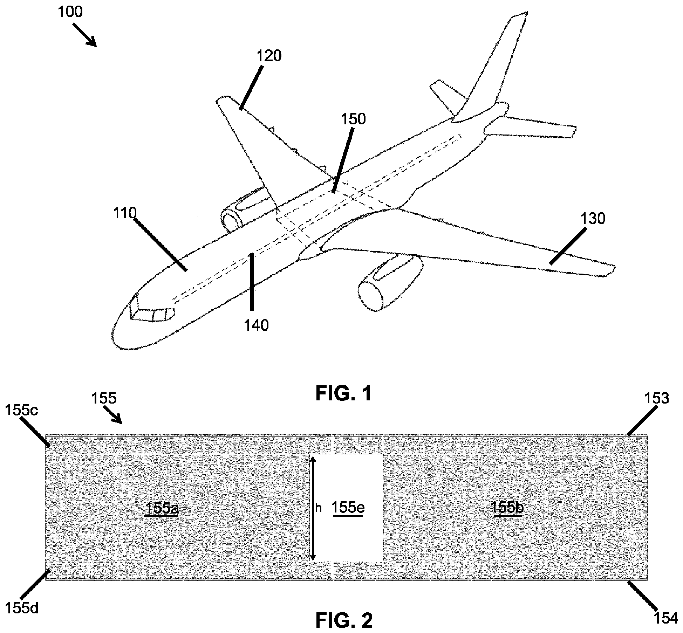

In the illustrated exemplary embodiment of FIG. 1, an aircraft 100 includes a fuselage 110, wings 120, 130 that are attached to a center wing box assembly 150 arranged within the fuselage 110. The center wing box assembly 150, which is operable to provide continuity to the wings 120, 130 through the fuselage 110, is also operable to absorb various stresses during the operation of aircraft 100. The center wing box assembly 150 is attached to one or more keel beams 140 which are also arranged in the fuselage 110.

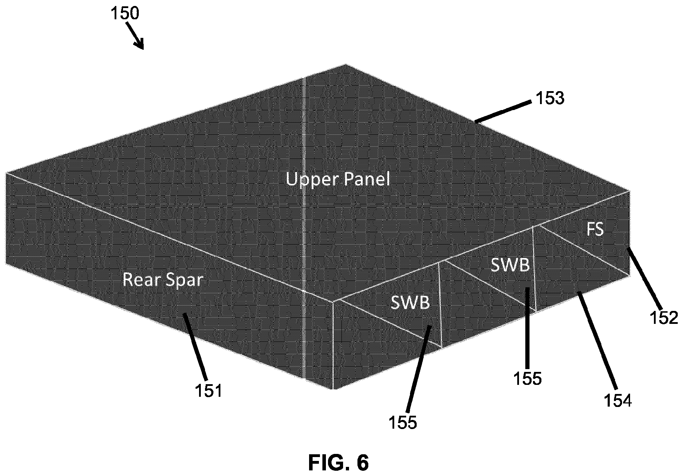

In the illustrated exemplary embodiment of FIG. 6, the center wing box assembly 150 includes a rear spar member 151, a forward spar member 152, an upper panel member 153, and a lower panel member 154 that defines an interior space that includes one or more compartments. The center wing box assembly 150 further includes one or more spanwise beam sections 155 that are arranged in the interior space to define the one or more compartments.

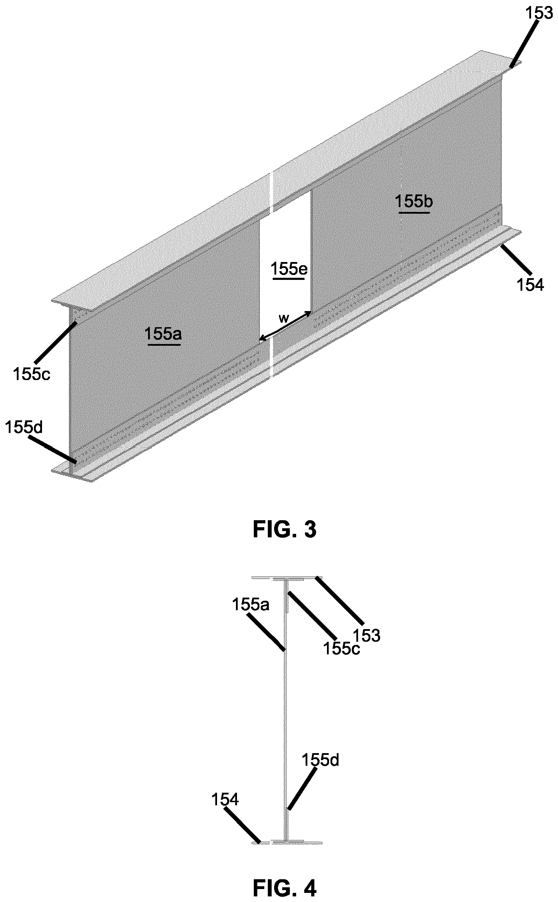

In the illustrated exemplary embodiment of FIGS. 2 to 4, each spanwise beam section 155 has a segmented structural configuration that comprises a first spanwise beam web section 155a and a second spanwise beam web section 155b that is spaced from the first spanwise beam web section 155a. The first spanwise beam web section 155a and the second spanwise beam web section 155b are operable to carry structural loads of the aircraft 100. An exemplary material for fabricating the first spanwise beam web section 155a and the second spanwise beam web section 155b includes, but is not limited to, carbon fiber. In the illustrated exemplary embodiment, the first spanwise beam web section 155a and the second spanwise beam web section 155b are arranged symmetrically relative to an access hole 155e. Embodiments, however, are not limited thereto. For example, the first spanwise beam web section 155a and the second spanwise beam web section 155b may be arranged asymmetrically relative to the access hole 155e.

A plurality of chord members is operable to serve as load-bearing structural reinforcement members for the first spanwise beam web section 155a and the second spanwise beam web section 155b. The plurality of chord members comprises an upper chord member 155c and a lower chord member 155d that is spaced from the upper chord member 155c. The center wing box assembly 150 also includes upper panel 153 and lower panel 154.

The upper chord member 155c and the lower chord member 155d extend across the space between the first spanwise beam web section 155a and the second spanwise beam web section 155b to connect the first spanwise beam web section 155a and the second spanwise beam web section 155b in a manner which defines an access hole 155e at the interior space. The upper chord member 155c extends in a lateral direction across for connection to an upper planar surface of the first spanwise beam web section 155a and an upper planar surface of the second spanwise beam web section 155b. The lower chord member 155d extends in a lateral direction across for connection to a lower planar surface of the first spanwise beam web section 155a and a lower planar surface of the second spanwise beam web section 155b.

The access hole 155e is defined by an inner peripheral edge of the first spanwise beam web section 155a, an inner peripheral edge of the second spanwise beam web section 155b, a lower peripheral edge of the upper chord member 155c, and an upper peripheral edge of the lower chord member 155d. The access hole 155e, in an exemplary embodiment includes, but is not limited to, a polygonal geometric shape/cross-section. In the illustrated exemplary embodiment, the polygonal geometric shape/cross-section comprises a rectangle. The access hole 155e has an overall size (area) that is greater than the overall size of traditional or existing access hole designs due to an increase in the height of the access hole 155e relative to a maximum height of traditional access holes. According to an exemplary embodiment, the access hole may span from the upper cord to the lower cord. The increased height of the access hole 155e provides an ergonomic design that facilitates ease in access into the interior space of the center wing box assembly 150 for purposes of assembly and maintenance.

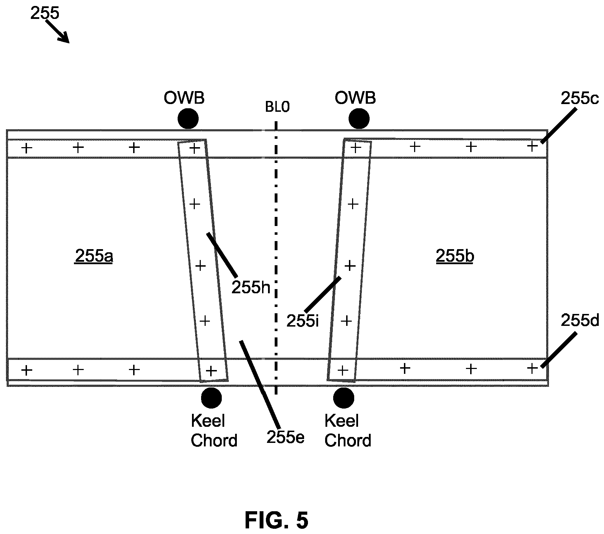

In the illustrated exemplary embodiment of FIG. 5, each spanwise beam section 255 has a segmented structural configuration that comprises a first spanwise beam web section 255a and a second spanwise beam web section 255b that is spaced from the first spanwise beam web section 255a. The first spanwise beam web section 255a and the second spanwise beam web section 255b are operable to carry structural loads of the aircraft 100. An exemplary material for fabricating the first spanwise beam web section 255a and the second spanwise beam web section 255b includes, but is not limited to, carbon fiber. In the illustrated exemplary embodiment, the first spanwise beam web section 255a and the second spanwise beam web section 255b are arranged symmetrically relative to the access hole 255e. Embodiments, however, are not limited thereto. For example, the first spanwise beam web section 255a and the second spanwise beam web section 255b may be arranged asymmetrically relative to the access hole 255e.

A plurality of chord members is operable to serve as load-bearing structural reinforcement members for the first spanwise beam web section 255a and the second spanwise beam web section 255b. The plurality of chord members comprises first chord members extending in a lateral direction for connection to a planar surface at upper regions and lower regions of the first spanwise beam web section 255a and the second spanwise beam web section 255b, and second chord members extending between and connected to the first chord members 255c, 255d.

The first chord members comprise an upper chord member 255c and a lower chord member 255d that is spaced from the upper chord member 255c. The second chord members comprise a left chord member 255h and a right chord member 255i. The left chord member 255h extends at an angle relative to the upper chord member 255c and a lower chord member 255d for connection to a planar surface at an inner peripheral edge region of the first spanwise beam section 255a. The right chord member 255i extends at an angle relative to the upper chord member 255c and a lower chord member 255d for connection to a planar surface at an inner peripheral edge region of the second spanwise beam web section 255b. Supporting structure such as one or more over wing beam (OWB) members and keel chord members are arranged at the corners of the access hole 255e to provide alternate load paths for the vertical shear loads while restraining bending of the spanwise beam chords 255c, 255d, 255h, 255i.

The upper chord member 255c and the lower chord member 255d extend across the space between the first spanwise beam web section 255a and the second spanwise beam web section 255b to connect the first spanwise beam web section 255a and the second spanwise beam web section 255b in a manner which at least partially defines the access hole 255e at the interior space. The upper chord member 255c extends in a lateral direction across for connection to an upper planar surface of the first spanwise beam web section 255a and an upper planar surface of the second spanwise beam web section 255b. The lower chord member 255d extends in a lateral direction across for connection to a lower planar surface of the first spanwise beam web section 255a and a lower planar surface of the second spanwise beam web section 255b.

In accordance with one example embodiment, the access hole 255e is defined by an inner peripheral surface of the left chord member 255h, an inner peripheral surface of the right chord member 255i, a lower peripheral surface of the upper chord member 255c, and an upper peripheral surface of the lower chord member 255d. The left chord member 255h and the right chord member 255i are also operable as a structural reinforcement that enhances the overall structural integrity of the center wing box at the access hole 255e in a manner which eliminates or otherwise reduces stress concentrations at the access hole 255e.

The access hole 255e, in another exemplary embodiment includes, but is not limited to, a polygonal geometric shape/cross-section. In the illustrated exemplary embodiment, the polygonal geometric shape/cross-section comprises an isosceles trapezoid. The access hole 255e has an overall size (area) that is greater than the overall size of traditional or existing access hole designs due to an increase in the height of the access hole 255e relative to a maximum height of traditional access holes. According to an exemplary embodiment, the access hole may span from the upper cord to the lower cord. The increased height of the access hole 255e provides an ergonomic design that facilitates ease in access into the interior space of the center wing box assembly for purposes of assembly and maintenance.

The terms "coupled," "attached," or "connected" used herein is to refer to any type of relationship, direct or indirect, between the components in question, and is to apply to electrical, mechanical, fluid, optical, electromagnetic, electromechanical or other connections. Additionally, the terms "first," "second," etc. are used herein only to facilitate discussion, and carry no particular temporal or chronological significance unless otherwise indicated. The terms "cause" or "causing" means to make, force, compel, direct, command, instruct, and/or enable an event or action to occur or at least be in a state where such event or action is to occur, either in a direct or indirect manner.

Those skilled in the art will appreciate from the foregoing description that the broad techniques of the one or more embodiments of the present disclosure is to be implemented in a variety of forms that fall within the scope of the claims.

## Claims

1. A spanwise beam section (155, 255) for a center wing box assembly (150) of an aircraft (100), the spanwise beam section (155, 255) having a segmented structural configuration that comprises:
a first spanwise beam web section (155a, 255a);
a second spanwise beam web section (155b, 255b) spaced apart spanwise from the first spanwise beam web section (155a, 255a); and
a plurality of chord members (155c, 155d, 255c, 255d) serving as load-bearing structural reinforcement members for the first spanwise beam web section (155a, 255a) and the second spanwise beam web section (155b, 255b), the chord members (155c, 155d, 255c, 255d) extending across an interior space between the first spanwise beam web section (155a, 255a) and the second spanwise beam web section (155b, 255b)
to connect the first spanwise beam web section (155a, 255a) and the second spanwise beam web section (155b, 255b) in a manner which defines an access hole (155e, 255e) at the interior space.

2. The spanwise beam section (155) of claim 1, wherein the plurality of chord members (155c, 155d) comprises an upper chord member (155c) extending in a lateral direction for connection to a planar surface of an upper region of the first spanwise beam web section (155a) and an upper region of the second spanwise beam web section (155b).

3. The spanwise beam section (155) of claim 2, wherein the plurality of chord members (155c, 155d) comprises a lower chord member (155d), spaced from the upper chord member (155c) and extending in a lateral direction for connection to a planar surface of a lower region of the first spanwise beam web section (155a) and a lower region of the second spanwise beam web section (155b).

4. The spanwise beam section (155) of claim 3, wherein the access hole (155e) is defined by the first spanwise beam web section (155a), the second spanwise beam web section (155b), the upper chord member (155c), and the lower chord member (155d).

5. The spanwise beam section (155) of claim 4, wherein the access hole (155e) is defined by an inner peripheral edge of the first spanwise beam web section (155a), an inner peripheral edge of the second spanwise beam web section (155b), a lower peripheral edge of the upper chord member (155c), and an upper peripheral edge of the lower chord member (155d).

6. The spanwise beam section (155) of any one of claims 1 to 5, wherein the first spanwise beam web section (155a) and the second spanwise beam web section (155b) are arranged symmetrically relative to the access hole (155e).

7. The spanwise beam section (155) of any one of claims 1 to 5, wherein the first spanwise beam web section (155a) and the second spanwise beam web section (155b) are arranged asymmetrically relative to the access hole (155e).

8. The spanwise beam section (155) of any one of claims 1 to 7, wherein the first spanwise beam web section (155a) is composed of a material web comprising carbon fiber.

9. The spanwise beam section (155) of any one of claims 1 to 8, wherein the second spanwise beam web section (155b) is composed of a material web comprising carbon fiber.

10. The spanwise beam section (255) of claim 1, wherein the plurality of chord members comprises first chord members extending in a lateral direction for connection to a planar surface at upper regions and lower regions of the first spanwise beam web section (255a) and the second spanwise beam web section (255b), and second chord members extending between and connected to the first chord members (255c, 255d), wherein:
the first chord members comprise an upper chord member (255c) and a lower chord member (255d) that is spaced from the upper chord member (255c);
the second chord members comprise a left chord member (255h) and a right chord member (255i),
and further wherein the left chord member (255h) extends at an angle relative to the upper chord member (255c) and a lower chord member (255d) for connection to a planar surface at an inner peripheral edge region of the first spanwise beam section (255a), and the right chord member (255i) extends at an angle relative to the upper chord member (255c) and a lower chord member (255d) for connection to a planar surface at an inner peripheral edge region of the second spanwise beam web section (255b).

11. The spanwise beam section (155) of claim 10, wherein the access hole (255e) has a polygonal geometric shape/cross-section comprising an isosceles trapezoid.

12. The spanwise beam section (155) of claim 10 or 11, further comprising one or more over wing beam (OWB) members and keel chord members arranged at the corners of the access hole (255e).

13. A center wing box assembly (150) for an aircraft (100), the center wing box assembly (150) comprising:
a forward spar member (152), a rear spar member (151), an upper panel member (153), and a lower panel member (154) that defines an interior space; and
one or more spanwise beam sections (155) arranged in the interior space, each spanwise beam section being in accordance to any one of claims 1 to 12.

14. An aircraft (100), comprising:
a center wing box assembly (150) according to claim 13.

15. An aircraft according to claim 13, comprising a fuselage (110), and wherein the access hole is centered on the fuselage centerline.

## Patentansprüche

1. Spannweiten-Trägerabschnitt (155, 255) für eine mittlere Flügelkastenanordnung (150) eines Luftfahrzeugs (100), wobei der Spannweiten-Trägerabschnitt (155, 255) eine segmentierte strukturelle Konfiguration aufweist, die aufweist:
einen ersten Spannweiten-Trägerstegabschnitt (155a, 255a);
einen zweiten Spannweiten-Trägerstegabschnitt (155b, 255b), der in einer Spannweitenrichtung von dem ersten Spannweiten-Trägerstegabschnitt (155a, 255a) beabstandet ist; und
eine Vielzahl von Sehnengliedern (155c, 155d, 255c, 255d), die als lasttragende strukturelle Verstärkungsglieder für den ersten Spannweiten-Trägerstegabschnitt (155a, 255a) und für den zweiten Spannweiten-Trägerstegabschnitt (155b, 255b) dienen, wobei sich die Sehnenglieder (155c, 155d, 255c, 255d) über einen Innenraum zwischen dem ersten Spannweiten-Trägerstegabschnitt (155a, 255a) und dem zweiten Spannweiten-Trägerstegabschnitt (155b, 255b) zum Verbinden des ersten Spannweiten-Trägerstegabschnitts (155a, 255a) und des zweiten Spannweiten-Trägerstegabschnitts (155b, 255b) auf eine Weise erstrecken, die ein Zugriffsloch (155e,255e) bei dem Innenraum definiert.

2. Spannweiten-Trägerabschnitt (155) nach Anspruch 1, wobei die Vielzahl von Sehnengliedern (155c, 155d) ein oberes Sehnenglied (155c) aufweist, das sich in einer lateralen Richtung zum Verbinden mit einer ebenen Fläche eines oberen Bereichs des ersten Spannweiten-Trägerstegabschnitts (155a) und eines oberen Bereichs des zweiten Spannweiten-Trägerstegabschnitts (155b) erstreckt.

3. Spannweiten-Trägerabschnitt (155) nach Anspruch 2, wobei die Vielzahl von Sehnengliedern (155c, 155d) ein unteres Sehnenglied (155d) aufweist, das von dem oberen Sehnenglied (155c) beabstandet ist und das sich in einer lateralen Richtung zum Verbinden mit einer ebenen Fläche eines unteren Bereichs des ersten Spannweiten-Trägerstegabschnitts (155a) und eines unteren Bereichs des zweiten Spannweiten-Trägerstegabschnitts (155b) erstreckt.

4. Spannweiten-Trägerabschnitt (155) nach Anspruch 3, wobei das Zugriffsloch (155e) durch den ersten Spannweiten-Trägerstegabschnitt (155a), den zweiten Spannweiten-Trägerstegabschnitt (155b), das obere Sehnenglied (155c) und das untere Sehnenglied (155d) definiert ist.

5. Spannweiten-Trägerabschnitt (155) nach Anspruch 4, wobei das Zugriffsloch (155e) durch einen Innenumfangsrand des ersten Spannweiten-Trägerstegabschnitts (155a), einen Innenumfangsrand des zweiten Spannweiten-Trägerstegabschnitts (155b), einen unteren Umfangsrand des oberen Sehnenglieds (155c) und einen oberen Umfangsrand des unteren Sehnenglieds (155d) definiert ist.

6. Spannweiten-Trägerabschnitt (155) nach einem der Ansprüche 1 bis 5, wobei der erste Spannweiten-Trägerstegabschnitt (155a) und der zweite Spannweiten-Trägerstegabschnitt (155b) symmetrisch relativ zum Zugriffsloch (155e) angeordnet sind.

7. Spannweiten-Trägerabschnitt (155) nach einem der Ansprüche 1 bis 5, wobei der erste Spannweiten-Trägerstegabschnitt (155a) und der zweite Spannweiten-Trägerstegabschnitt (155b) asymmetrisch relativ zum Zugriffsloch (155e) angeordnet sind.

8. Spannweiten-Trägerabschnitt (155) nach einem der Ansprüche 1 bis 7, wobei sich der erste Spannweiten-Trägerstegabschnitt (155a) aus einem Materialsteg zusammensetzt, der Kohlenstofffasern aufweist.

9. Spannweiten-Trägerabschnitt (155) nach einem der Ansprüche 1 bis 8, wobei sich der zweite Spannweiten-Trägerstegabschnitt (155b) aus einem Materialsteg zusammensetzt, der Kohlenstofffasern aufweist.

10. Spannweiten-Trägerabschnitt (255) nach Anspruch 1, wobei die Vielzahl von Sehnengliedern erste Sehnenglieder, die sich in einer lateralen Richtung zur Verbindung mit einer ebenen Fläche bei oberen Bereichen und unteren Bereichen des ersten Spannweiten-Trägerstegabschnitts (255a) und des zweiten Spannweiten-Trägerstegabschnitts (255b) erstreckt, und zweite Sehnenglieder aufweist, die sich zwischen den ersten Sehnengliedern (255c, 255d) erstrecken und damit verbunden sind, wobei:
die ersten Sehnenglieder ein oberes Sehnenglied (255c) und ein unteres Sehnenglied (255d) aufweisen, das von dem oberen Sehnenglied (255c) beabstandet ist;
die zweiten Sehnenglieder ein linkes Sehnenglied (255h) und ein rechtes Sehnenglied (255i) aufweisen,
und ferner wobei sich das linke Sehnenglied (255h) in einem Winkel relativ zu dem oberen Sehnenglied (255c) und einem unteren Sehnenglied (255d) zur Verbindung mit einer ebenen Fläche bei einem Innenumfangsrandbereich des ersten Spannweiten-Trägerabschnitts (255a) erstreckt, und sich das rechte Sehnenglied (255i) in einem Winkel relativ zu dem oberen Sehnenglied (255c) und einem unteren Sehnenglied (255d) zur Verbindung mit einer ebenen Fläche bei einem Innenumfangsrandbereich des zweiten Spannweiten-Trägerstegabschnitts (255b) erstreckt.

11. Spannweiten-Trägerabschnitt (155) nach Anspruch 10, wobei das Zugriffsloch (255e) eine polygonale geometrische Form/Querschnitt aufweist, die bzw. der ein gleichschenkliges Trapez aufweist.

12. Spannweiten-Trägerabschnitt (155) nach Anspruch 10 oder 11, der ferner ein oder mehrere Überflügelträger-(OWB)Glieder und Kielsehnenglieder aufweist, die in den Ecken des Zugriffslochs (255e) angeordnet sind.

13. Mittlere Flügelkastenanordnung (150) für ein Luftfahrzeug (100), wobei die mittlere Flügelkastenanordnung (150) aufweist:
ein vorderes Holmglied (152), ein hinteres Holmglied (151), ein oberes Plattenglied (153) und ein unteres Plattenglied (154), das einen Innenraum definiert; und
einen oder mehrere Spannweiten-Trägerabschnitte (155), die in dem Innenraum angeordnet sind, wobei jeder Spannweiten-Trägerabschnitt gemäß einem der Ansprüche 1 bis 12 ausgebildet ist.

14. Luftfahrzeug (100), das aufweist:
eine mittlere Flügelkastenanordnung (150) nach Anspruch 13.

15. Luftfahrzeug nach Anspruch 13, das einen Rumpf (110) aufweist, und wobei das Zugriffsloch auf der Rumpfmittellinie zentriert ist.

## Revendications

1. Section de poutre dans le sens de l'envergure (155, 255) destinée à un ensemble caisson central de voilure (150) d'un aéronef (100), la section de poutre dans le sens de l'envergure (155, 255) ayant une configuration structurale segmentée qui comprend :
une première section d'âme de poutre dans le sens de l'envergure (155a, 255a) ;
une seconde section d'âme de poutre dans le sens de l'envergure (155b, 255b) espacée dans le sens de l'envergure de la première section d'âme de poutre dans le sens de l'envergure (155a, 255a) ; et
une pluralité de membrures (155c, 155d, 255c, 255d) servant d'éléments de renfort structuraux de support de charge pour la première section d'âme de poutre dans le sens de l'envergure (155a, 255a) et pour la seconde section d'âme de poutre dans le sens de l'envergure (155b, 255b), les membrures (155c, 155d, 255c, 255d) s'étendant à travers un espace intérieur entre la première section d'âme de poutre dans le sens de l'envergure (155a, 255a) et la seconde section d'âme de poutre dans le sens de l'envergure (155b, 255b) pour relier la première section d'âme de poutre dans le sens de l'envergure (155a, 255a) et la seconde section d'âme de poutre dans le sens de l'envergure (155b, 255b) d'une manière qui définit un trou d'accès (155e, 255e) au niveau de l'espace intérieur.

2. Section de poutre dans le sens de l'envergure (155) selon la revendication 1, dans laquelle la pluralité de membrures (155c, 155d) comprend une membrure supérieure (155c) s'étendant dans une direction latérale à des fins de liaison avec une surface plane d'une région supérieure de la première section d'âme de poutre dans le sens de l'envergure (155a) et d'une région supérieure de la seconde section d'âme de poutre dans le sens de l'envergure (155b).

3. Section de poutre dans le sens de l'envergure (155) selon la revendication 2, dans laquelle la pluralité de membrures (155c, 155d) comprend une membrure inférieure (155d), espacée de la membrure supérieure (155c) et s'étendant dans une direction latérale à des fins de liaison avec une surface plane d'une région inférieure de la première section d'âme de poutre dans le sens de l'envergure (155a) et d'une région inférieure de la seconde section d'âme de poutre dans le sens de l'envergure (155b).

4. Section de poutre dans le sens de l'envergure (155) selon la revendication 3, dans laquelle le trou d'accès (155e) est défini par la première section d'âme de poutre dans le sens de l'envergure (155a), par la seconde section d'âme de poutre dans le sens de l'envergure (155b), par la membrure supérieure (155c) et par la membrure inférieure (155d).

5. Section de poutre dans le sens de l'envergure (155) selon la revendication 4, dans laquelle le trou d'accès (155e) est défini par un bord périphérique interne de la première section d'âme de poutre dans le sens de l'envergure (155a), par un bord périphérique interne de la seconde section d'âme de poutre dans le sens de l'envergure (155b), par un bord périphérique inférieur de la membrure supérieure (155c) et par un bord périphérique supérieur de la membrure inférieure (155d).

6. Section de poutre dans le sens de l'envergure (155) selon l'une quelconque des revendications 1 à 5, dans laquelle la première section d'âme de poutre dans le sens de l'envergure (155a) et la seconde section d'âme de poutre dans le sens de l'envergure (155b) sont disposées de manière symétrique par rapport au trou d'accès (155e).

7. Section de poutre dans le sens de l'envergure (155) selon l'une quelconque des revendications 1 à 5, dans laquelle la première section d'âme de poutre dans le sens de l'envergure (155a) et la seconde section d'âme de poutre dans le sens de l'envergure (155b) sont disposées de manière asymétrique par rapport au trou d'accès (155e).

8. Section de poutre dans le sens de l'envergure (155) selon l'une quelconque des revendications 1 à 7, dans laquelle la première section d'âme de poutre dans le sens de l'envergure (155a) est composée d'une âme de matériau comprenant de la fibre de carbone.

9. Section de poutre dans le sens de l'envergure (155) selon l'une quelconque des revendications 1 à 8, dans laquelle la seconde section d'âme de poutre dans le sens de l'envergure (155b) est composée d'une âme de matériau comprenant de la fibre de carbone.

10. Section de poutre dans le sens de l'envergure (255) selon la revendication 1, dans laquelle la pluralité de membrures comprend des premières membrures s'étendant dans une direction latérale à des fins de liaison avec une surface plane au niveau de régions supérieures et de régions inférieures de la première section d'âme de poutre dans le sens de l'envergure (255a) et de la seconde section d'âme de poutre dans le sens de l'envergure (255b), et des secondes membrures s'étendant entre les premières membrures (255c, 255d) et les reliant, dans laquelle :
les premières membrures comprennent une membrure supérieure (255c) et une membrure inférieure (255d) qui est espacée de la membrure supérieure (255c) ;
les secondes membrures comprennent une membrure gauche (255h) et une membrure droite (255i),
et en outre dans laquelle la membrure gauche (255h) s'étend à un certain un angle par rapport à la membrure supérieure (255c) et à une membrure inférieure (255d) à des fins de liaison avec une surface plane au niveau d'une région de bord périphérique interne de la première section de poutre dans le sens de l'envergure (255a), et la membrure droite (255i) s'étend à un certain angle par rapport à la membrure supérieure (255c) et à une membrure inférieure (255d) à des fins de liaison avec une surface plane au niveau d'une région de bord périphérique interne de la seconde section d'âme de poutre dans le sens de l'envergure (255b).

11. Section de poutre dans le sens de l'envergure (155) selon la revendication 10, dans laquelle le trou d'accès (255e) a une forme géométrique/section transversale polygonale comprenant un trapèze isocèle.

12. Section de poutre dans le sens de l'envergure (155) selon la revendication 10 ou la revendication 11, comprenant en outre un ou plusieurs éléments de poutre d'extrados (OWB) et des membrures de poutre principale disposés au niveau des angles du trou d'accès (255e).

13. Ensemble de caisson central de voilure (150) destiné à un aéronef (100), l'ensemble de caisson central de voilure (150) comprenant :
un élément de longeron avant (152), un élément de longeron arrière (151), un élément de panneau supérieur (153) et un élément de panneau inférieur (154) qui définisent un espace intérieur ; et
une ou plusieurs sections de poutre dans le sens de l'envergure (155) disposées dans l'espace intérieur, chaque section de poutre dans le sens de l'envergure étant selon l'une quelconque des revendications 1 à 12.

14. Aéronef (100), comprenant :
un ensemble de caisson central de voilure (150) selon la revendication 13.

15. Aéronef selon la revendication 13, comprenant un fuselage (110), et dans lequel le trou d'accès est centré sur l'axe longitudinal de fuselage.
